**Europäisches Patentamt**

**European Patent Office**

**Office européen des brevets**

(19)

(11) Veröffentlichungsnummer: **0 247 304 B1**

## (12) EUROPÄISCHE PATENTSCHRIFT

(45) Veröffentlichungstag der Patentschrift: **10.07.91**

(21) Anmeldenummer: **87103675.2**

(22) Anmeldetag: **13.03.87**

(51) Int. Cl.⁵: **H01G 1/02**, H01G 9/10, H01F 27/02, H05K 5/06

(54) **Verfahren zum dichten Verschliessen eines becherförmigen Gehäuses eines elektrischen Baulements mit einem Deckel.**

(30) Priorität: **29.05.86 DE 3618066**

(43) Veröffentlichungstag der Anmeldung:
**02.12.87 Patentblatt 87/49**

(45) Bekanntmachung des Hinweises auf die
Patenterteilung:
**10.07.91 Patentblatt 91/28**

(84) Benannte Vertragsstaaten:
**DE FR GB IT SE**

(56) Entgegenhaltungen:
**DE-U- 8 614 496**
**US-A- 3 828 423**
**US-A- 4 015 745**

(73) Patentinhaber: **Licentia Patent-Verwaltungs-GmbH**
**Theodor-Stern-Kai 1**
**W-6000 Frankfurt/Main 70(DE)**

(72) Erfinder: **Viernickel, Konrad**
**Falkenhausenweg 21 g**
**W-1000 Berlin 46(DE)**
Erfinder: **Wartusch, Johann**
**Am Kaiserberg 13**
**W-3502 Vellmar(DE)**

(74) Vertreter: **Lertes, Kurt, Dr. et al**
**Licentia Patent-Verwaltungs-GmbH Theodor-Stern-Kai 1**
**W-6000 Frankfurt/M 70(DE)**

## Beschreibung

Die Erfindung bezieht sich auf ein Verfahren entsprechend dem Oberbegriff des Anspruchs 1.

Ein solches becherförmiges, einen nach außen ausladenden Gehäuserand aufweisendes Gehäuse eines elektrischen Bauelements, insbesondere eines Kondensators, das mit einem Deckel und einem zwischen dem Deckel und dem Gehäuserand angeordneten Dichtungsring dicht verschlossen wird, ist durch die DE-A-879 733 bekannt. Zum Verschließen muß dabei der aus Metall bestehende Deckel gegen das Gehäuse gedrückt werden, so daß auf den Dichtungsring ein entsprechender Dichtdruck ausgeübt wird, worauf ein den Gehäuserand übergreifender Teil des Deckels hinter dem Rand umgebördelt wird. Ein derartiges Verschließen ist für ein rationelles serienmäßiges Fertigen von elektrischen Bauelementen wenig geeignet. Dieses noch um so weniger, wenn der Querschnitt des becherförmigen Gehäuses flachoval-zylindrisch ausgeführt ist. Besteht der Deckel aus einem Kunststoff, ist ohnehin ein Umbördeln nur mit einem Heißpreßverfahren möglich (DE-A-35 16 658 venöffentlicht am 13.11.86).

Durch den Prospekt der Firma Branson Schallkraft GmbH, D-6056 Heusenstamm "Rationelles Verschweißen von Kunststoffen" ist es bekannt, thermoplastische Kunststoffe zu verschweißen; insbesondere läßt sich auch eine Verschweißung durch Ultraschall vornehmen.

Trotz des vielfältigen Einsatzes des Kunststoffschweißens ist dieses bei dem Verschließen der Gehäuse elektrischer Bauelemente mit einem Deckel, speziell bei mit Isolieröl flüssigkeitsimprägnierten Kondensatoren, bisher nicht eingesetzt worden. Zum einen ist aus bestimmten Gründen das becherförmige Gehäuse aus Metall gefertigt, so daß sich schon dadurch ein dichtes Verschweißen verbietet, zum anderen ist befürchtet worden, daß die Werkstoffe beim Verschweißen als tan $\delta$ -Erhöhung durch extrahierbare Stoffe auftretende negative elektrische Rückwirkungen auf das Isolieröl hervorrufen und daß verschiedene Imprägnierflüssigkeiten im Gehäuse, wie z. B. Isopropyl-Biphenyl den Schweißvorgang stören bzw. einen dichten Abschluß verhindern.

Der Erfindung liegt die Aufgabe zugrunde, ein Verfahren der eingangs genannten Art anzugeben, das eine dichte Verbindung eines metallenen, eine beliebige Isolierflüssigkeit enthaltenden Gehäuses beliebig zylindrisch-ovalen Querschnitts mit einem Kunststoffdeckel im Zuge einer rationellen Serienfertigung bei kurzer Verfahrenszeit gestattet.

Diese Aufgabe wird gemäß der Erfindung durch die im Anspruch 1 gekennzeichneten Merkmale gelöst.

Es hat sich gezeigt, daß dieses Verfahren sehr kurze Verfahrensabläufe ermöglicht, ohne daß Fertigungstoleranzen beim Deckel eine Rolle spielen. Besonders bei einem flachoval-zylindrischen Querschnitt des Gehäuses ist die Zeitersparnis für das Verschließen bemerkenswert. Die üblichen Imprägnierflüssigkeiten für Kondensatoren im Gehäuse stören wider Erwarten den Schweißvorgang nicht, da sie wegen ihrer geringen Viskosität und relativ leichten Verdampfbarkeit aus der Verschweißungszone weitgehend herausgedrückt werden, worauf die Restmenge dann verdampft. Eine unerwünschte tan $\delta$ -Erhöhung eines im becherförmigen Gehäuse vorhandenen Isolieröles eines Kondensators durch evtl. extrahierbare Bestandteile des Dichtungsringes bzw. des Deckels kann durch geeignete Auswahl und Rezepturgestaltung der Werkstoffe vermieden werden. So kann der Deckel z. B. aus glasfaserverstärktem Polyamid geformt werden. Der Dichtungsring wird vorteilhafterweise mit einem Gummimaterial gewählt, das keine das Isolieröl dielektrisch verschlechternden Substanzen abgibt. Als Gummimaterial wird ein heißvernetztes Silikonelastomer verwendet, dessen Quellung im Isolieröl zwischen 10% und 80%, vorzugsweise zwischen 20% und 30% beträgt.

Da durch die Verbindung des Kunststoffdeckels mit dem Kunststoff-Verschweißungsring die Isolationsstrecke von den üblicherweise auf der Deckeloberseite befindlichen elektrischen Anschlüssen des Bauelements zum Metallgehäuse groß ist, kann eine sonst eventuell zusätzlich notwendige Isolation um diese Anschlüsse fortgelassen werden, und die Bauelemente sind vorteilhafterweise in kleineren Abmessungen für höhere Spannungen herstellbar.

Weitere vorteilhafte Ausgestaltungen des Verfahrens nach der Erfindung sind in den Unteransprüchen gekennzeichnet.

Die Erfindung soll anhand eines Beispiels im folgenden mittels der Zeichnung erläutert werden. Es zeigen

Fig. 1     die Ansicht eines nach dem Verfahren nach der Erfindung verschlossenen Kondensators,

Fig. 2     einen Schnitt durch den in Fig. 1 gezeigten Kondensator vor dem Verschließen,

Fig. 3     einen Schnitt durch eine Verschweißungszone mit dem Deckel und dem Gehäuse vor dem Verschließen,

Fig. 4     die in Fig. 3 gezeigte Zone nach dem Verschweißen und

Fig. 5     einen Schnitt durch eine Verschweißungszone in gegenüber der Ausbildung nach Fig. 3 geänderter Ausführung.

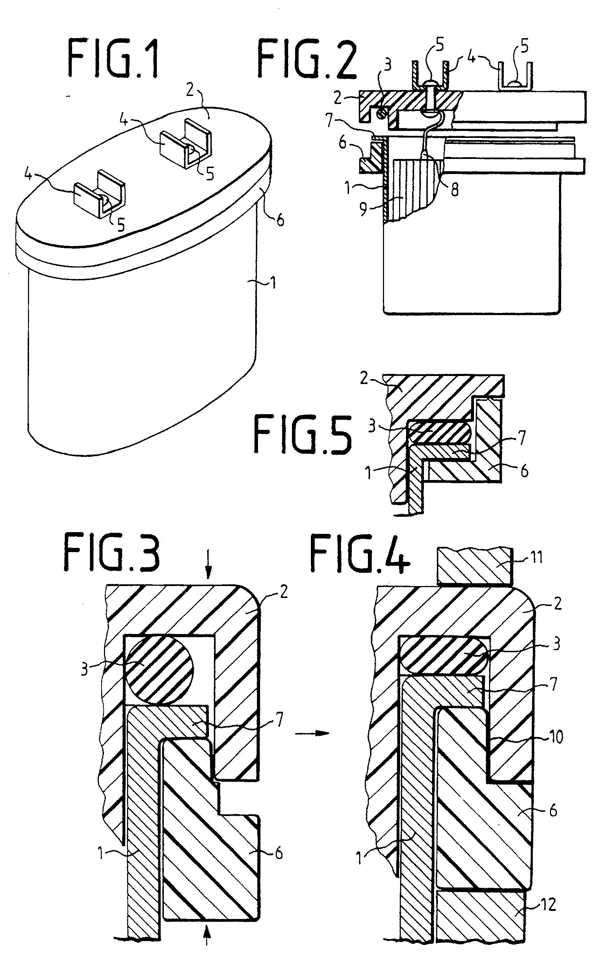

Fig. 1 gibt die Ansicht eines elektrischen Bauelements in Form eines elektrischen Kondensators wieder, dessen metallenes, ein flachoval-zylindrischen Querschnitt aufweisendes Gehäuse 1 mit einem aus thermoplastischem Kunststoff bestehenden Deckel 2 dicht verschlossen sein soll. Auf dem Deckel 2 sind die üblichen elektrischen Anschlüsse 4 mit Durchführungsnieten 5 angeordnet. Als Metall des Gehäuses 1 dient in der Regel Aluminium.

In Fig. 2 ist der in Fig. 1 dargestellte Kondensator im Schnitt vor dem Verschließen gezeigt. Im Gehäuse 1, das einen nach außen ausladenden Gehäuserand 7 aufweist,sind vorzugsweise mit einer Imprägnierflüssigkeit (wie z.B. Isopropyl-Biphenyl) imprägnierte Kondensatorwickel 9 angeordnet, die über Anschlußfahnen 8 an die Durchführungsniete 5 und damit elektrisch auch an die elektrischen Anschlüsse 4 angeschlossen sind.

Gegenüber dem Gehäuserand 7 und in der Breite diesem entsprechend weist der Deckel 2 eine Nut mit einem Dictungsring 3 auf. Dieser besteht aus einem elastischen Material, vorzugsweise Gummi.

Unter den Gehäuserand 7 ist ein Verschweißungsring 6 aus ebenfalls thermoplastischem Material gelegt. Der Verschweißungsring 6 kann auch zur einfacheren Montage aus zwei sich an den Schnittstellen berührenden Halbringen bestehen.

Im Detail ist die Anordnung des Bereichs in dem gemäß dem Verfahren nach der Erfindung eine dichte Verbindung zwischen dem Deckel 2 und dem Gehäuse 1 herbeigeführt werden soll, in Fig. 3 gezeigt.

Nachdem der Verschweißungsring 6 unter den Gehäuserand 7 und der Dichtungsring zwischen das Gehäuse 1 und den Deckel 2 gelegt sind, wird entsprechend den senkrechten Pfeilen in Fig. 3 der Deckel 2 in Kontakt mit dem Verschweißungsring 6 gebracht.

Sodann wird durch Auflegen des Verschweißungsringes 6 auf einen Amboß 12 und gleichzeitigem Druck einer Sonotrode 11 eines (nicht näher gezeigten) Ultraschallschweißgeräts auf den Deckel 2 (oder durch entsprechenden Gegendruck auf das Gehäuse 1 und den Amboß 12) der Dichtungsring 3 entsprechend Fig. 4 zusammengedrückt, so daß ein ausreichend hoher Dichtungsdruck zwischen Deckel 2 und Gehäuse 1 auftritt. Die Preßkraft kann z. B. 1500 bis 2000 N betragen. Über die Sonotrode 11 eingeleitete Ultraschallwellen wird gleichzeitig der thermoplastische Kunststoff des Deckels 2 und des Verschweißungsringes 6 im Verschweißungsbereich 10 soweit erwärmt, daß die plastifizierten Nahtstellen der beiden Teile sich vermischen. Dieser Vorgang dauert in der Regel weniger als 1 s. Anschließend erfolgt über nur einige Sekunden bei weiter anhaltendem Druck zwischen dem Deckel 2 und dem Gehäuse 1 eine Abkühlung des Bereiches 10, der damit eine unlösbare und dichte, gleichmäßig feste Verbindung zwischen den verschweißten Teilen darstellt.

Die eventuell vorher im Verschweißungsbereich 10 noch vorhandene Imprägnierflüssigkeit wird durch den Druck zwischen dem Gehäuse 1 bzw. dem Verschweißungsring 6 und dem Deckel 2 herausgedrückt bzw. bei Beginn des Erwärmungsprozesses verdampft, so daß sie den Verschweißungsvorgang nicht behindert.

Wie erkennbar ist, wird durch den über den Gehäuserand 7 herübergezogenen Teil des Deckels 2 und den anschließenden Teil des Verschweißungsringes 6 ein verhältnismäßig langer Isolationsabstand zwischen den elektrischen Anschlüssen 4 am Deckel 2 und dem metallenen Gehäuse 1 geschaffen, der es ermöglicht, daß die mit dem zeitsparenden Verschlußverfahren nach der Erfindung hergestellten Bauelemente bei kleineren Abmessungen für höhere Spannungen (z. B. über 1 kV) geeignet sind.

In Fig. 5 ist eine andere Ausbildung des Verschweißungsringes 6 gezeigt. Dieser ist über den Gehäuserand 7 zum Deckel hochgezogen. Diese Anordnung bringt beim Ultraschall-Verschweißen zwischen dem Deckel 2 und dem Verschweißungsring 6 den Vorteil, daß das Gehäuse 1 nicht unmittelbar am schwingenden System liegt. Daraus resultiert ein verminderter Bedarf an Schweißenergie. Auch sind die Schweißbedingungen leichter reproduzierbar, da sie nicht vom Gehäuse 1 (und seiner Füllung) abhängig sind.

**Ansprüche**

1.  Verfahren zum dichten Verschließen eines becherförmigen Gehäuses (1) eines elektrischen Bauelements mit einem Deckel (2) und einem zwischen dem nach außen ausladenden Gehäuserand (7) und dem Deckel (2) angeordneten Dichtungsring (3),
    **dadurch gekennzeichnet,**
    daß unter den Gehäuserand (7) des aus Metall gefertigten Gehäuses (1) ein aus thermoplastischem Kunststoff bestehender Verschweißungsring (6) gelegt wird,
    daß nach dem Einbringen des Dichtungsringes (3) zwischen den Gehäuserand (7) und den aus demselben thermoplastischen Kunststoff bestehenden Deckel (2) dieser Deckel (2) in Kontakt mit dem Verschweißungsring (6) gebracht wird und
    daß der Deckel (2) dann auf den Dichtungsring (3) gedrückt und währenddessen mit dem Verschweißungsring (6) verschweißt wird.

2.  Verfahren nach Anspruch 1,
    **dadurch gekennzeichnet,**
    daß zum Verschweißen die Plastifizierungswärme der Verbindungszone zwischen Verschweißungsring (6) und Deckel (2) durch Ultraschall zugeführt wird.

3. Verfahren nach einem der Ansprüche 1 oder 2, **dadurch gekennzeichnet,** daß der Verschweißungsring (6) aus zwei Halbringen besteht, die unter den Gehäuserand (7) gelegt werden.

4. Verfahren nach einem der Ansprüche 1 bis 3, für ein elektrisches Bauelement, in dessen Gehäuse (1) sich ein Isolieröl befindet, **dadurch gekennzeichnet,** daß der Dichtungsring (3) aus einem Gummimaterial gewählt wird, das keine das Isolieröl dielektrisch verschlechternden Substanzen abgibt.

5. Verfahren nach Anspruch 4, **dadurch gekennzeichnet,** daß als Gummimaterial ein heißvernetztes Silikonelastomer verwendet wird, dessen Quellung im Isolieröl zwischen 10 % und 80 %, vorzugsweise 20 % und 30 % beträgt.

## Claims

1. Method for the tight closure of a beaker-shaped housing (1) of an electrical component with a lid (2) and a sealing ring (3) arranged between the lid (2) and the outwardly projecting housing rim (7), characterised thereby, that a welding ring (6) consisting of thermoplastic synthetic material is laid below the housing rim (7) of the housing (1) made of metal, that after the introduction of the sealing ring (3) between the housing rim (7) and the lid (2) consisting of the same thermoplastic synthetic material, this lid (2) is brought into contact with the welding ring (6) and that the lid (2) is then pressed onto the sealing ring (3) and meanwhile welded together with the welding ring (6).

2. Method according to claim 1, characterised thereby, that the plasticising heat for the welding-together is supplied to the connecting zone between the welding ring (6) and the lid (2) by ultrasonics.

3. Method according to one of the claims 1 and 2, characterised thereby, that the welding ring (6) consists of two half rings which are laid under the housing rim (7).

4. Method according to one of the claims 1 to 3, for an electrical component, in the housing (1) of which an insulating oil is disposed, characterised thereby, that the sealing ring (3) is chosen from a rubber material which does not give off any substances impairing the insulating oil dielectrically.

5. Method according to claim 4, characterised thereby, that a hot-crosslinked silicone elastomer, the swelling of which in the insulating oil amounts to between 10% and 80%, preferably 20% and 30%, is used as rubber material.

## Revendications

1. Procédé de fermeture étanche d'un boîtier en forme de récipient (1) d'un composant électrique, comportant un couvercle (2) et un anneau d'étanchéité (3) agencé entre le couvercle (2) et le bord (7) du boîtier en saillie vers l'extérieur, caractérisé par le fait que l'on pose un anneau pour soudage (6), fait d'une matière synthétique thermoplastique, en dessous du bord (7) du boîtier (1) fait en métal, par le fait qu'après la mise en place de l'anneau d'étanchéité (3) entre le bord (7) du boîtier et le couvercle (2) fait de la même matière synthétique thermoplastique, on met ce couvercle (2) en contact avec l'anneau pour soudage (6), et par le fait que l'on pousse alors le couvercle (2) sur l'anneau d'étanchéité (3) et, au cours de cela, on le soude à l'anneau pour soudage (6).

2. Procédé selon revendication 1, caractérisé par le fait que, pour le soudage, la chaleur de plastification de la zone de liaison entre anneau pour soudage (6) et couvercle (2) est amenée par ultrasons.

3. Procédé selon l'une des revendications 1 ou 2, caractérisé par le fait que l'anneau pour soudage (6) est constitué par deux demi-anneaux qui sont posés en dessous du bord (7) du boîtier.

4. Procédé selon l'une des revendications 1 à 3, pour un composant électrique dans le boîtier (1) duquel se trouve une huile isolante, caractérisé par le fait que l'anneau d'étanchéité (3) est choisi en un matériau en caoutchouc ne libérant aucune substance détériorant diélectriquement l'huile isolante.

5. Procédé selon revendication 4, caractérisé par le fait que l'on utilise, en tant que matériau en caoutchouc, un élastomère silicone réticulé à chaud, dont le gonflement dans l'huile isolante vaut entre 10 % et 80 % , de préférence entre 20 % et 30 %.

# FIG.1

# FIG.2

# FIG.5

# FIG.3

# FIG.4